(19) Europäisches Patentamt
European Patent Office
Office européen des brevets

(11) **EP 1 468 323 B1**

(12) **FASCICULE DE BREVET EUROPEEN**

(45) Date de publication et mention
de la délivrance du brevet:
**09.11.2016 Bulletin 2016/45**

(21) Numéro de dépôt: **03709870.4**

(22) Date de dépôt: **10.01.2003**

(51) Int Cl.:
***G02B 27/01*** *(2006.01)*

(86) Numéro de dépôt international:
**PCT/FR2003/000072**

(87) Numéro de publication internationale:
**WO 2003/058320 (17.07.2003 Gazette 2003/29)**

(54) **LENTILLE OPHTALMIQUE PRESENTANT UN INSERT DE PROJECTION**

OPHTALMISCHE LINSE MIT EINEM EINGESETZTEN PROJEKTIONSELEMENT

OPHTHALMIC LENS WITH A PROJECTION INSERT

(84) Etats contractants désignés:
**AT BE BG CH CY CZ DE DK EE ES FI FR GB GR HU IE IT LI LU MC NL PT SE SI SK TR**

(30) Priorité: **11.01.2002 FR 0200303**

(43) Date de publication de la demande:
**20.10.2004 Bulletin 2004/43**

(73) Titulaires:
• **ESSILOR INTERNATIONAL
(Compagnie Générale d'Optique)
94220 Charenton le Pont (FR)**
• **The Microoptical Corporation
Westwood, MA 02090 (US)**

(72) Inventeurs:
• **MOLITON, Renaud
75015 Paris (FR)**
• **ZAVRACKY, Paul
Norwood, MA 02062 (US)**

(74) Mandataire: **Cabinet Plasseraud
66, rue de la Chaussée d'Antin
75440 Paris Cedex 09 (FR)**

(56) Documents cités:
**EP-A2- 0 395 570      WO-A1-96/04216
US-A- 4 070 097      US-A- 4 968 117
US-A- 5 886 822      US-A- 6 124 977
US-B1- 6 204 974**

**Description**

La présente invention concerne les lentilles ophtalmiques présentant des inserts de projection d'une image vers l'utilisateur, et plus spécifiquement l'atténuation des images parasites dans une telle lentille.

Les brevets US-A-5 886 822 et US-B-6 204 974 décrivent des systèmes de combinaison d'images pour lunettes ou masques; une image est projetée vers l'oeil du porteur, par un chemin optique ménagé dans la lentille; dans ces brevets comme dans la présente description, on appelle "lentille" le système optique contenant les inserts, qui peut notamment être destiné à être monté dans une monture de lunettes ou dans un masque. Dans un mode de réalisation, ce chemin optique est défini par des inserts montés dans l'épaisseur de la lentille; les inserts proposés dans ces brevets comprennent des miroirs, des lames semi-réfléchissantes, des cubes séparateurs de polarisation, des lames quart d'onde, des lentilles, des miroirs, des lentilles réfléchissantes concaves (un miroir de Mangin, par exemple) des lentilles diffractives et/ou des composants holographiques. Il est proposé de monter ces inserts dans la lentille dans un moulage par injection, ou encore d'usiner les inserts et de les assembler avec les autres éléments de la lentille.

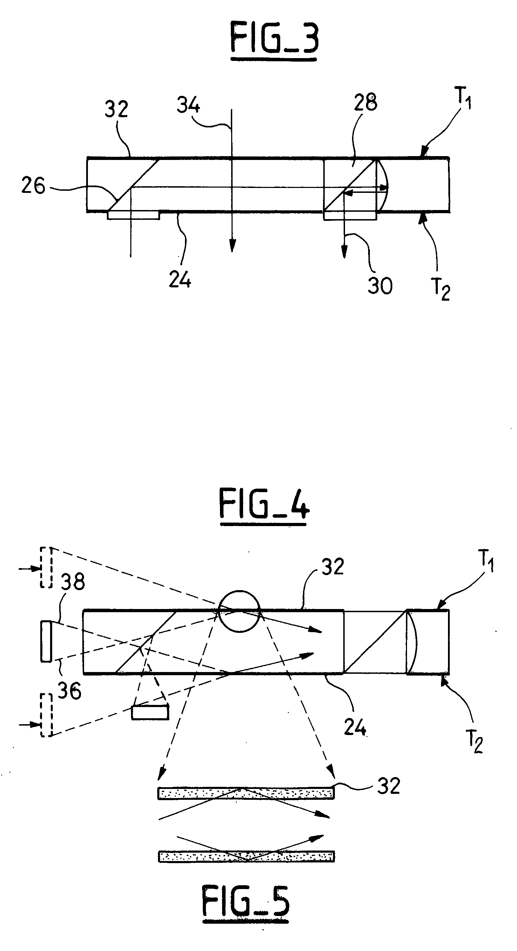

Dans l'exemple de la figure 4 de US-A-5 886 822, la lentille est formée par montage d'un insert en forme de cube entre deux plaques de verre ou de plastique. Un premier polariseur est disposé autour de l'insert entre les deux plaques de verre; l'insert est conçu de façon à transmettre la polarisation suivant la même direction que le premier polariseur; un deuxième polariseur est monté rotatif sur un support devant la plaque de verre éloignée de l'oeil de l'utilisateur. Cette lentille permet à l'utilisateur de voir à la fois la lumière projetée à travers l'insert et la lumière provenant de la scène ambiante, qui passe autour de l'insert et à travers celui-ci. Cette lumière ambiante traverse les deux polariseurs ou le deuxième polariseur et l'insert. La rotation du deuxième polariseur permet à l'utilisateur de régler l'équilibre entre l'image projetée et l'image ambiante. Dans l'exemple de la figure 8, il est proposé d'utiliser un panneau à cristal liquide et un capteur pour compenser ou équilibrer automatiquement les brillances relatives de l'image projetée et de l'image ambiante. Il est aussi proposé dans ce document (col. 11 ligne 51) d'utiliser des matériaux photochromiques pour contrôler la lumière ambiante. Aucune précision n'est donnée sur l'usage de tels matériaux. Enfin, ce document suggère aussi de masquer la présence des inserts par des films polariseurs, photochromiques, teintés ou réfléchissants, comme pour les verres solaires; ces films ne sont utilisés qu'à des fins esthétiques.

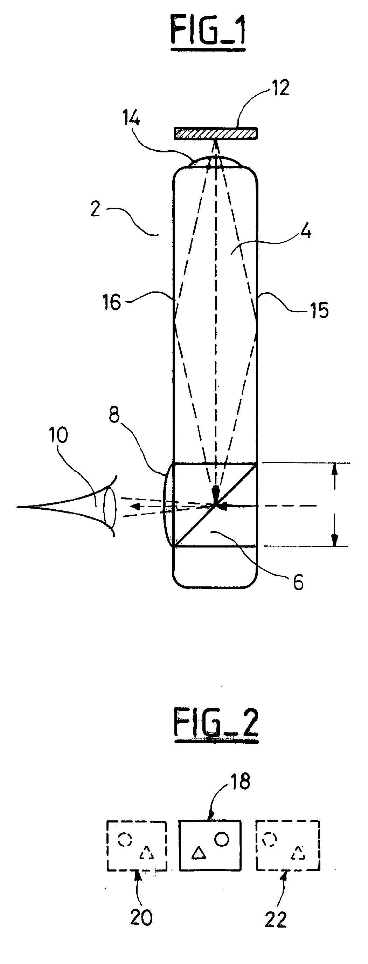

L'invention repose sur la découverte d'un problème d'images parasites, dans les lentilles présentant des inserts. La figure 1 montre, à titre d'exemple, une lentille dans laquelle ce problème se pose. Elle montre un schéma de principe d'une lentille du genre proposé à la figure 7 du brevet US-A-5 886 822. La lentille ophtalmique 2 est un système optique formé d'un matériau 4, dans lequel est disposé un insert 6; l'insert 6 renvoie, à travers une lentille de focalisation 8 vers l'oeil 10 de l'utilisateur la lumière provenant d'une source 12; la lumière provenant de la source 12 est injectée dans l'épaisseur de la lentille ophtalmique à travers une lentille de focalisation 14 disposée à la périphérie de la lentille ophtalmique. La lumière provenant de l'environnement extérieur traverse l'insert 6 et la lentille de focalisation 8 et parvient aussi à l'oeil de l'utilisateur. Celui-ci peut donc voir à la fois l'image provenant de la source 12 et l'environnement extérieur.

L'image provenant de la source est projetée depuis la lentille de focalisation vers l'insert, et est transmise par l'insert vers l'oeil de l'utilisateur. Il est toutefois possible que la lumière provenant de la source soit réfléchie sur la paroi avant 15 de la lentille, et forme ainsi une image parasite, qualifiée dans la suite d'image avant ou image parasite avant. D est encore possible que la lumière provenant de la source soit réfléchie sur la paroi arrière 16 de la lentille et forme ainsi une autre image parasite, qualifiée dans la suite d'image arrière ou image parasite arrière. Les traits discontinus sur la figure 1 symbolisent la propagation de l'image directe, et des images réfléchies sur les parois avant et arrière de la lentille.

La figure 2 montre schématiquement les images projetées, telles que l'utilisateur les voit L'image 18 est l'image projetée directement de la lentille de focalisation vers l'insert; les images 20 et 22 sont les images parasites projetées après réflexions respectives sur les faces avant et arrière de la lentille. Ces images parasites peuvent présenter une brillance proche de celle de l'image principale. De fait, compte tenu des angles de réflexion proposés dans l'exemple, la réflexion est une réflexion totale.

Il existe donc un besoin d'une lentille présentant des inserts, dans laquelle les images parasites seraient atténuées ou supprimées.

US-A-6 124 977 décrit un appareil d'affichage d'images, qui utilise comme système optique un prisme modifié. Les images à afficher sont appliquées sur une première surface du prisme par un dispositif d'affichage. Elles se réfléchissent sur la troisième surface du prisme, puis sur la deuxième surface avant de traverser la troisième surface pour arriver à l'oeil de l'utilisateur. La deuxième surface du prisme est munie d'un revêtement réfléchissant et par endroit, d'un revêtement noir absorbant. Cet appareil ne comprend pas d'insert qui reçoit une lumière se propageant dans la lentille et renvoie cette lumière vers l'oeil de l'utilisateur.

En conséquence, la présente invention a pour objet une lentille ophtalmique telle que définie dans la revendication 1 ainsi qu'un procédé tel que défini dans la revendication 10.

Dans un mode de réalisation, l'invention propose une lentille ophtalmique présentant au moins un insert de projection vers l'oeil de l'utilisateur adapté à recevoir une lumière se propageant dans la lentille, la lentille présentant sur au moins une surface un traitement atténuant la lumière se réfléchissant sur la dite surface depuis l'intérieur de la lentille.

Selon une variante, le traitement s'étend sur la surface de la lentille opposée à l'utilisateur.

Selon une autre variante, le traitement s'étend sur la surface de la lentille dirigée vers l'utilisateur.

Selon encore une variante, le traitement ne s'étend pas sur la partie de la surface de la lentille par laquelle la lumière provenant de l'insert est projetée vers l'utilisateur.

Selon encore une autre variante, la lentille présente un insert de réception adapté à recevoir une lumière provenant de l'extérieur de la lentille pour la projeter vers l'insert de projection.

On peut encore prévoir que le traitement ne s'étend pas sur la partie de la surface de la lentille par laquelle la lumière provenant de l'extérieur de la lentille pénètre dans la lentille.

Selon une variante, le traitement est un traitement de pigmentation de la lentille au voisinage de sa surface.

Selon encore une variante, le traitement de pigmentation s'effectue sur une profondeur inférieure à 50 $\mu$m à partir de la surface.

Selon encore une variante, le traitement de pigmentation s'effectue sur une profondeur de 10 à 50 $\mu$m à partir de la surface.

Selon une autre variante, le traitement est une couche additionnelle apportée sur la surface.

Selon encore une autre variante, la couche additionnelle est colorée.

L'invention a également pour objet un procédé pour diminuer l'intensité relative des images parasites dans une lentille ophtalmique présentant au moins un insert de projection vers l'oeil de l'utilisateur adapté à recevoir une lumière se propageant dans la lentille, le procédé comprenant l'application sur au moins une surface de la lentille d'un traitement atténuant la lumière se réfléchissant sur la dite surface depuis l'intérieur de la lentille.

Selon une variante, l'application s'effectue sur la surface de la lentille opposée à l'utilisateur.

Selon une autre variante, l'application s'effectue sur la surface de la lentille dirigée vers l'utilisateur.

Selon encore une variante, l'application ne s'effectue pas sur la partie de la surface de la lentille par laquelle la lumière provenant de l'insert est projetée vers l'utilisateur.

Selon encore une autre variante, le procédé comprend avant l'étape d'application une étape de masquage de la partie de la surface de la lentille par laquelle la lumière provenant de l'insert est projetée vers l'utilisateur.

On prévoit encore que le procédé comprend après l'étape d'application une étape de démasquage de la partie de la surface de la lentille par laquelle la lumière provenant de l'insert est projetée vers l'utilisateur.

Selon une variante, la lentille présente un insert de réception adapté à recevoir une lumière provenant de l'extérieur de la lentille pour la projeter vers l'insert de projection et que l'application ne s'effectue pas sur la partie de la surface de la lentille par laquelle la lumière provenant de l'extérieur de la lentille pénètre dans la lentille.

Selon encore une variante, le procédé comprend avant l'étape d'application une étape de masquage de la partie de la surface de la lentille par laquelle la lumière provenant de l'extérieur de la lentille pénètre dans la lentille.

Selon une autre variante, le procédé comprend après l'étape d'application une étape de démasquage de la partie de la surface de la lentille par laquelle la lumière provenant de l'extérieur de la lentille pénètre dans la lentille.

Selon encore une autre variante, le traitement est un traitement de pigmentation de la lentille au voisinage de sa surface.

On prévoit encore que le traitement de pigmentation s'effectue sur une profondeur inférieure à 50$\mu$m à partir de la surface.

Selon une variante, le traitement de pigmentation s'effectue sur une profondeur de 10 à 50 $\mu$m à partir de la surface.

Selon encore une variante, le traitement de pigmentation s'effectue par immersion de la lentille dans un bain de pigment.

Selon une autre variante, l'étape d'application du traitement comprend l'application d'une couche additionnelle.

Selon encore une autre variante, la couche additionnelle est colorée.

On prévoit encore que le traitement de surface est appliqué à une surface de l'insert et que le procédé comprend en outre l'étape de montage de l'insert sur la lentille.

Selon une variante, le procédé comprend en outre une étape ultérieure de masquage des surfaces de l'insert traitées, le traitement de surface étant ensuite appliqué à la lentille.

D'autres caractéristiques et avantages de l'invention apparaîtront à la lecture de la description détaillée qui suit des modes de réalisation de l'invention, donnés à titre d'exemple uniquement et en références aux dessins qui montrent :

- figure 1, un schéma de principe d'une lentille de l'état de la technique présentant des inserts;
- figure 2, un schéma de principe de l'image projetée et des images parasites dans la lentille de la figure 1;
- figure 3, une vue en coupe d'un premier mode de réalisation de l'invention;
- figure 4, une vue similaire à celle de la figure 3, montrant le trajet de la lumière générant les images parasites;

- figure 5, une vue à plus grande échelle d'une partie de la figure 3, montrant la réflexion sur les surfaces de la lentille.

L'invention permet de fournir une solution au problème des images parasites, dans une lentille présentant des inserts. Elle s'applique bien entendu à d'autres types de lentilles que celle proposée à titre d'exemple dans la figure 1. Ainsi, elle s'applique notamment à toute lentille présentant des inserts et dans laquelle la lumière incidente sur l'insert se propage dans l'épaisseur de la lentille. Un exemple est donné à la figure 8 de US-A-5 886 822, dans laquelle la source est disposée du même côté de la lentille que l'oeil de l'utilisateur et dans laquelle l'image est injectée dans la lentille à l'aide d'un insert du même type que l'insert 6. Plus généralement, l'invention trouve à s'appliquer dès lors que la lumière projetée vers l'utilisateur se réfléchit sur une des surfaces de la lentille avant d'atteindre l'insert projetant l'image vers l'utilisateur.

L'invention propose, pour diminuer la brillance des images parasites, de prévoir sur au moins une surface de la lentille un traitement absorbant ou atténuant. Ce traitement a pour effet d'atténuer les rayons de la lumière se réfléchissant sur les surfaces de la lentille, depuis l'intérieur de la lentille. Les rayons formant les images parasites par réflexion sur la ou les surfaces de la lentille sont donc atténués par rapport aux rayons formant l'image principale; en effet, ces derniers se propagent dans la lentille, et pas au voisinage de ses surfaces.

La figure 3 est une vue en coupe d'un premier mode de réalisation de l'invention. Dans ce mode de réalisation, la source de l'image projetée est du même côté de la lentille que l'oeil de l'utilisateur. La lumière projetée par la source pénètre en traversant la surface arrière 24 de la lentille dans un premier insert 26. Elle y est réfléchie suivant une direction de propagation parallèle au plan de la lentille, vers un deuxième insert 28. Le deuxième insert reçoit la lumière provenant du premier insert, et la transmet vers l'oeil de l'utilisateur. Sur la figure, la référence 30 indique le trajet d'un rayon lumineux provenant de la source. Par ailleurs, la lumière ambiante traverse la surface avant 32 de la lentille, la surface arrière de la lentille et arrive à l'oeil de l'utilisateur. La référence 34 sur la figure indique le trajet d'un rayon de la lumière ambiante.

La figure 3 montre encore, en gras sur la figure, que la surface avant de la lentille est traitée en surface. Le traitement a pour effet d'absorber une partie de la lumière qui le traverse, et est appliqué à la surface de la lentille, ou sur une faible épaisseur dans le matériau; on entend ici par faible épaisseur des distances de l'ordre de quelques micromètres, de préférence inférieures à 50μm, par exemple comprises entre 10 et 50 μm.

Dans l'exemple de la figure 3, la surface arrière de la lentille est aussi traitée, à l'exception des surfaces des inserts ou des surfaces par lesquelles passe la lumière projetée. Dans la configuration la plus simple, l'atténuation sur la face avant et sur la face arrière sont identiques. Ceci permet une même atténuation des images parasites obtenues par réflexion sur les surfaces avant et arrière; il peut à l'évidence en être autrement, notamment si l'une des images parasites est moins gênante du fait de la constitution de la lentille, ou de la focalisation de la source.

Des exemples de traitement de surface adaptés sont donnés dans la suite de la description.

Le fonctionnement de la lentille de la figure 3 est le suivant. Comme le montre sur la figure le rayon 30, la lumière provenant de la source pénètre dans le premier insert, sans traverser la partie traitée de la surface arrière; elle ressort de la lentille par le deuxième insert, sans non plus traverser la surface traitée. Le traitement de la surface avant ou de la surface arrière, voire des deux, est sans incidence sur la lumière projetée qui forme l'image principale.

La lumière ambiante 34 traversant la lentille autour des inserts subit une atténuation du fait de la traversée de la surface avant du verre, et de la partie de la surface arrière qui est traitée.

La figure 4 est identique à la figure 3, mais elle montre les rayons se réfléchissant sur les surfaces avant et arrière de la lentille. Comme le montre le rayon référencé 36, la lumière provenant de la source forme une image parasite après réflexion sur la surface avant 32. Elle subit donc une atténuation fonction de l'absorption provoquée par le traitement de surface. De la même façon, le rayon 38 forme une image parasite après réflexion sur la surface arrière 24, dans la partie traitée. L'image parasite formée après réflexion sur la surface arrière est donc aussi atténuée. Sur cette figure, par souci de clarté, le chemin optique correspondant au trajet dans l'insert 26 a été déplié et la position de la source s'en trouve donc modifiée.

La figure 5 est une vue à plus grande échelle d'une partie de la figure 4, qui montre la réflexion des rayons provenant de la source de projection sur les surfaces avant et arrière de la lentille; la figure montre l'exemple d'un traitement absorbant appliqué sur une faible épaisseur sur chaque surface de la lentille. On note respectivement $T_1$ et $T_2$ les coefficients de transmission d'une lumière en incidence normale sur la surface avant de la lentille et sur la surface arrière de la lentille. On note respectivement $\theta_1$ et $\theta_2$ l'angle d'incidence de la lumière formant l'image avant et l'image arrière. Du fait de la configuration de la lentille, ces angles d'incidence sont en moyenne supérieurs à 60°, et souvent proches de 90°. Il est connu pour un traitement absorbant avec un coefficient linéaire d'absorption donné que l'absorption est une fonction exponentielle du produit de l'absorption linéaire par la distance parcourue dans le matériau. Par rapport à la lumière en incidence normale, un rayon se propageant dans la lentille et se réfléchissant sur la surface de la lentille avec un angle d'incidence $\theta_1$ traverse deux fois la couche absorbante, en parcourant une distance qui est le rapport de l'épaisseur de la couche absorbante au cosinus de l'angle d'incidence $\theta_1$. L'absorption subie par un tel rayon s'écrit donc

$$T = T_1^{\frac{2}{\cos\theta_1}}$$

De la même façon, un rayon se réfléchissant sur la surface arrière de la lentille subit une absorption

$$T = T_2^{\frac{2}{\cos\theta_2}}$$

Il est donc possible, notamment du fait du fort angle d'incidence de la lumière d'appliquer une forte atténuation à la lumière formant les images parasites, sans pour autant pénaliser la transmission de la lumière ambiante à travers la lentille. L'exemple des figures 3 à 5 permet ainsi de limiter la gêne provoquée par les images parasites.

La lentille des figures permet donc d'atténuer les images parasites, tout en transmettant les images ambiantes. La lentille peut toujours transmettre les images, ou permettre une vision en transmission.

Dans l'exemple des figures 3 à 5, le traitement est appliqué sur la surface arrière de la lentille, à l'exception du lieu de passage de la lumière de l'image projetée. Il est possible d'appliquer aussi le traitement sur le lieu de passage de la lumière de l'image projetée, ou sur un seul des inserts. Le tableau ci-dessous donne les valeurs de transmission pour l'image principale, l'image avant, l'image arrière et la lumière ambiante, dans différents cas d'application du traitement. On reste dans l'exemple de calcul d'absorption proposé plus haut. Les atténuations dérivent à l'évidence des valeurs de transmission proposées.

Tableau 1

| | Image projetée | Image avant | Image arrière | Lumière ambiante transmise |
|---|---|---|---|---|
| Exemple 1 | 1 | $T = T_1^{\frac{2}{\cos\theta_1}}$ | $T = T_2^{\frac{2}{\cos\theta_2}}$ | $T_1.T_2$ |
| Exemple 2 | 1 | 1 | $T = T_2^{\frac{2}{\cos\theta_2}}$ | $T_2$ |
| Exemple 3 | 1 | $T = T_1^{\frac{2}{\cos\theta_1}}$ | 1 | $T_1$ |
| Exemple 4 | $T_2$ | $T = T_2.T_1^{\frac{2}{\cos\theta_1}}$ | $T = T_2^{1+\frac{2}{\cos\theta_2}}$ | $T_1.T_2$ |
| Exemple 5 | $T_2^2$ | $T = T_2^2.T_1^{\frac{2}{\cos\theta_1}}$ | $T = T_2^{2+\frac{2}{\cos\theta_2}}$ | $T_1.T_2$ |
| Exemple 6 | $T_2$ | $T_2$ | $T = T_2^{1+\frac{2}{\cos\theta_2}}$ | $T_2$ |
| Exemple 7 | $T_2^2$ | $T_2^2$ | $T = T_2^{2+\frac{2}{\cos\theta_2}}$ | $T_2$ |
| Exemple 8 | $T_2$ | $T_2$ | $T = T_2^{1+\frac{2}{\cos\theta_2}}$ | $T_2$ |
| Exemple 9 | $T_2$ | $T = T_2.T_1^{\frac{2}{\cos\theta_1}}$ | $T = T_2^{1+\frac{2}{\cos\theta_2}}$ | $T_1.T_2$ |

L'exemple 1 est celui de la figure 3. L'exemple 2 est identique à celui de la figure 3, mais sans traitement sur la surface avant. L'exemple 3 est identique à celui de la figure 3, mais sans traitement sur la surface arrière. L'exemple 4 est identique à celui de la figure 3, mais avec un traitement sur le premier insert. L'exemple 5 est identique à celui de la figure 3, mais avec un traitement sur les deux inserts. L'exemple 6 est celui d'un traitement sur la surface arrière, sauf sur le deuxième insert, mais pas de traitement sur la surface avant. L'exemple 7 est celui d'un traitement sur la toute la surface arrière, sans traitement de la surface avant. L'exemple 8 est celui d'un traitement sur la surface arrière, sauf sur le premier insert, sans traitement sur la surface avant. L'exemple 9 est celui d'un traitement sur la surface arrière, sauf sur le premier insert et d'un traitement sur la surface avant. Ce dernier exemple est particulièrement avantageux pour les lentilles permettant aussi aux utilisateurs de voir la scène ambiante à travers les inserts ; dans ce cas, on obtient une image ambiante qui présente en tout point la même atténuation.

Ces exemples montrent qu'il est possible de choisir, en fonction des circonstances et de l'allure de la lentille, l'atténuation appliquée à l'image avant, à l'image arrière ou à l'image ambiante, par rapport à l'atténuation appliquée à l'image projetée. Bien entendu, on pourrait appliquer d'autres traitements, et calculer différemment la transmission, du fait de la nature du traitement; il n'en resterait pas moins possible de modifier les atténuations relatives des différentes images.

Dans l'exemple qui précède, la lentille est une lentille du type "see-through" ("voir à travers" en traduction littérale en langue française) dans laquelle l'image ambiante se forme autour des inserts. Il est aussi possible d'appliquer un traitement absorbant à des lentilles "see-around" ("voir autour" en traduction littérale en langue française) dans laquelle l'image ambiante est formée à travers les inserts.

Dans l'exemple, on a négligé la pénétration du pigment au-delà de la zone de pénétration considérée; cette pénétration peut entraîner une atténuation de l'image principale. Cette atténuation reste toutefois faible par rapport à l'atténuation des images parasites lors de la réflexion. En outre, cette atténuation s'applique en fait à toutes les images formées à travers la lentille. Il est donc légitime de la négliger. En tout état de cause, la valeur de cette atténuation peut être prévue : en effet, la façon suivant laquelle la densité d'absorption varie en fonction de la profondeur de pénétration est connue et une modélisation optique du système permet d'en déduire la perte de flux sur l'image projetée. On a aussi négligé le coefficient de transmission des inserts. De nouveau, le même raisonnement s'applique; la seule incidence pourrait être de changer la brillance de l'image projetée par rapport à l'image ambiante. Cette brillance est en tout état de cause réglée par d'autres moyens-intensité de la source, etc.

On donne maintenant des exemples de traitement de surface, qui peuvent permettre d'atténuer la lumière se réfléchissant sur la surface depuis l'intérieur de la lentille.

Pour ce qui est des verres organiques, les pigments peuvent être de type ionique et peuvent être choisis en fonction de la structure chimique de la matrice polymère. A titre d'exemple, on a utilisé les pigments fournis par la Société BPI ("Brain Power Incorporated") domiciliée à Miami en Floride, pour une matrice polymère du type indiqué ci-dessous. La coloration peut s'effectuer par trempage dans un bain de colorant, à une température donnée T, pendant une durée donnée t. La profondeur de pénétration d dépend essentiellement de la nature du pigment. La profondeur de pénétration peut aussi dépendre de la durée de trempage, ainsi que du matériau constituant la lentille. L'avantage d'un tel mode de formation du traitement de surface est aussi de permettre facilement de masquer les inserts ou toute autre partie de la lentille.

Exemple 1

Le pigment est appliqué à une lentille organique obtenue par polymérisation du diallylcarbonate de diéthylèneglycol: Un premier pigment est le pigment noir vendu sous la référence "black BPI". Le bain est à une température T de 92°C et l'immersion dure de 1 à 3mn. La profondeur de pénétration du pigment est de l'ordre de 10$\mu$m. Un autre essai avec le pigment rouge vendu sous la référence "red BPI", pour une même température de bain et une même durée d'immersion conduit à une profondeur de pénétration de 50 $\mu$m. Dans cet exemple, on constate que pour un même matériau, dans les mêmes conditions de température, la profondeur d de pénétration du pigment dépend essentiellement du choix du pigment.

Exemple 2

Le pigment est appliqué à une lentille organique à base de diméthacrylate de tétra(éthoxy)bisphénol A; les deux pigments mentionnés ci-dessus sont appliqués avec une durée d'immersion de 1 à 3 mn. Les profondeurs de pénétration sont identiques.

Exemple 3

Le pigment est appliqué à une lentille à base de polythiouréthane d'indice 1,6. Le pigment utilisé est celui vendu sous la référence "black BPI". La température d'immersion T est de 92°C et l'immersion dure environ 2 h pour une profondeur de pénétration de l'ordre de 10 $\mu$m. De façon générale, on privilégiera un pigment ayant une profondeur de pénétration la plus faible possible de façon à minimiser le risque d'atténuation de l'image projetée.

Selon un autre mode de réalisation, le traitement absorbant prévu sur la surface de la lentille peut être réalisé en appliquant sur cette surface une couche additionnelle susceptible d'être colorée. Une couche mince de vernis contenant des pigments absorbants peut, par exemple, être déposée à la surface de la lentille.

Il est alors nécessaire, pour le choix du matériau de la couche additionnelle, de tenir compte de l'indice de réfraction du matériau de la lentille. Les valeurs des indices de réfraction de l'une et de l'autre sont préférentiellement proches, idéalement égales.

Un tel traitement convient aussi bien pour des lentilles en matière organique que pour des lentilles en matière minérale

Les tableaux qui suivent fournissent des mesures expérimentales de l'atténuation des images parasites, effectuées sur une lentille présentant la configuration de la figure 3, et sur une lentille présentant une configuration analogue, mais sans traitement des surfaces. Le traitement utilisé dans l'exemple est un traitement du type « black BPI ». Les mesures sont effectuées à l'aide d'un photomètre imageur, sur plusieurs images, en procédant à chaque image à plusieurs lectures. Le tableau 2 donne les résultats pour une lentille n'ayant pas subi de traitement, et le tableau 3 donne les résultats pour une lentille du type de la figure 3.

Tableau 2

| Lentille non teintée | 1ère lecture | 2ème lecture | Moyenne des mesures | Rapport d'intensité |
|---|---|---|---|---|
| Image parasite « de gauche » | 3296 1018 1169 | 4655 1541 1253 | 2155.52 | 66% |
| Image principale | 3296 3784 2870 | 3076 4055 2500 | 3263.35 | 100% |
| Image parasite « de droite » | 2870 3076 1770 | 2333 2679 2177 | 2484.21 | 76% |

Tableau 3

| Lentille teintée | 1<sup>ère</sup> lecture | 2<sup>ème</sup> lecture | Moyenne des mesures | Rapport d'intensité |
|---|---|---|---|---|
| Image parasite « de gauche » | 256 181 208 | 294 239 239 | 236.02 | 10% |
| Image principale | 1541 3531 1652 | 1770 2870 2333 | 2282.99 | 100% |
| Image parasite « de droite » | 181 158 147 | 169 208 181 | 174.02 | 8% |

| | Différence entre les rapports : (Non teinté)-(Teinté) | Rapport d'intensité (Teinté)/(Non teinté) |
|---|---|---|
| Image parasite « de gauche » | 56% | 11% |
| Image principale | 0% | 70% |
| Image parasite « de droite » | 68% | 7% |

La comparaison des résultats des deux tableaux montre que l'intensité de l'image parasite passe de 60 à 70 % de l'image principale à environ 10% de l'image principale. On note aussi que l'intensité de l'image principale est également réduite d'environ 30% dans le tableau 3 par rapport à la mesure du tableau 2; comme indiqué plus haut, ceci peut être provoqué par une pénétration trop important du pigment au-delà de la surface. Bien entendu, la présente invention n'est pas limitée aux modes de réalisations décrits à titre d'exemple; ainsi, on peut prévoir des inserts autres que ceux des exemples. Les inserts peuvent notamment comprendre des prismes miroités, des cubes semi-transparents à séparation de polarisation, des lames quart d'onde ou des miroirs de Mangin. Ces inserts peuvent être formés par dépôt de couches minces constituant des traitements optiques sur des éléments minéraux ou organiques. On peut notamment citer les lentilles diffractives ou les composants holographiques.

Dans l'exemple des figures, les inserts sont moulés dans la lentille pour former un ensemble monobloc; il est aussi possible d'appliquer un traitement de surface à des lentilles assemblées et non pas à des lentilles moulées.

Selon une variante, on peut appliquer un traitement de surface préalable aux inserts. Ce traitement est par exemple appliqué sur les surfaces des inserts qui doivent ensuite être placées dans l'alignement des surfaces traitées de la lentille. Le procédé peut ensuite comprendre les étapes suivantes : un insert préalablement traité est monté sur la lentille, puis on traite les surfaces 24 et 32 en masquant éventuellement les différentes surfaces de l'insert.

On peut aussi utiliser d'autres techniques de masquage pour assurer que le traitement ne s'étend pas sur les inserts.

**Revendications**

1. Une lentille ophtalmique permettant une vision ambiante en transmission et présentant au moins un insert (26, 28) de projection vers l'oeil de l'utilisateur adapté à recevoir une lumière se propageant dans la lentille, **caractérisée en ce que** la lentille présente, sur au moins une surface transmettant la lumière ambiante, un traitement absorbant appliqué sur une faible épaisseur atténuant la lumière se réfléchissant sur la dite surface depuis l'intérieur de la lentille, le traitement s'étendant sur la surface (24) de la lentille dirigée vers l'utilisateur, le traitement ne s'étendant pas sur la partie de la surface de la lentille à travers laquelle la lumière provenant de l'insert est projetée vers l'utilisateur, pour atténuer les rayons formant les images parasites par réflexion sur la ou les surfaces de la lentille par rapport aux rayons formant l'image principale, se propageant dans la lentille et non au voisinage de ses surfaces.

2. La lentille de la revendication 1, **caractérisée en ce que** le traitement s'étend sur la surface (32) de la lentille opposée à l'utilisateur.

3. La lentille de l'une des revendications 1 à 2, **caractérisée en ce qu'**elle présente un (26) de réception adapté à recevoir une lumière provenant de l'extérieur de la lentille pour la projeter vers (28) de projection.

4. La lentille de la revendication 3, **caractérisée en ce que** le traitement ne s'étend pas sur la partie de la surface de la lentille par laquelle la lumière provenant de l'extérieur de la lentille pénètre dans la lentille.

5. La lentille de la revendication 4, **caractérisée en ce que** le traitement est un traitement de pigmentation de la lentille au voisinage de sa surface.

6. La lentille de la revendication 5, **caractérisée en ce que** le traitement de pigmentation s'effectue sur une profondeur inférieure à 50 $\mu$m à partir de la surface.

7. La lentille de la revendication 6, **caractérisée en ce que** le traitement de pigmentation s'effectue sur une profondeur de 10 à 50 $\mu$m à partir de la surface.

8. La lentille de l'une des revendications 1 à 4, **caractérisée en ce que** le traitement est une couche additionnelle apportée sur la surface.

9. La lentille de la revendication 8, **caractérisée en ce que** la couche additionnelle est colorée.

10. Un procédé pour diminuer l'intensité relative des rayons formant les images parasites par réflexion sur la ou les surfaces de la lentille par rapport aux rayons formant l'image principale, se propageant dans la lentille et non au voisinage de ses surfaces dans une lentille ophtalmique permettant la vision ambiante en transmission et présentant au moins un insert (26, 28) de projection vers l'oeil de l'utilisateur adapté à recevoir une lumière se propageant dans la lentille, le procédé comprenant l'application, sur au moins une surface de la lentille transmettant la lumière ambiante, d'un traitement absorbant appliqué sur une faible épaisseur atténuant la lumière se réfléchissant sur la dite surface depuis l'intérieur de la lentille, l'application s'effectuant sur la surface (24) de la lentille dirigée vers l'utilisateur et ne s'effectuant pas sur la partie de la surface de la lentille à travers laquelle la lumière provenant de l'insert est projetée vers l'utilisateur.

11. Le procédé de la revendication 10, **caractérisé en ce que** l'application s'effectue sur la surface (32) de la lentille opposée à l'utilisateur.

12. Le procédé de la revendication 10, **caractérisé en ce qu'**il comprend avant l'étape d'application une étape de masquage de la partie de la surface de la lentille par laquelle la lumière provenant de l'insert est projetée vers l'utilisateur.

13. Le procédé de la revendication 12, **caractérisé en ce qu'**il comprend après l'étape d'application une étape de démasquage de la partie de la surface de la lentille par laquelle la lumière provenant de l'insert est projetée vers l'utilisateur.

14. Le procédé de l'une des revendications 10 à 13, **caractérisé en ce que** la lentille présente un insert (26) de réception adapté à recevoir une lumière provenant de l'extérieur de la lentille pour la projeter vers (28) de projection et que l'application ne s'effectue pas sur la partie de la surface de la lentille par laquelle la lumière provenant de l'extérieur de la lentille pénètre dans la lentille.

15. Le procédé de la revendication 14, **caractérisé en ce qu'**il comprend avant l'étape d'application une étape de masquage de la partie de la surface de la lentille par laquelle la lumière provenant de l'extérieur de la lentille pénètre dans la lentille.

16. Le procédé de la revendication 15, **caractérisé en ce qu'**il comprend après l'étape d'application une étape de démasquage de la partie de la surface de la lentille par laquelle la lumière provenant de l'extérieur de la lentille pénètre dans la lentille.

17. Le procédé de l'une des revendications 10 à 16, **caractérisé en ce que** le traitement est un traitement de pigmentation de la lentille au voisinage de sa surface.

18. Le procédé de la revendication 17, caractérisé en ce le traitement de pigmentation s'effectue sur une profondeur inférieure à 50 μm à partir de la surface.

19. Le procédé de la revendication 18, caractérisé en ce le traitement de pigmentation s'effectue sur une profondeur de 10 à 50 μm à partir de la surface.

20. Le procédé de l'une des revendications 17 à 19, caractérisé en ce le traitement de pigmentation s'effectue par immersion de la lentille dans un bain de pigment.

21. Le procédé de l'une des revendications 10 à 16, **caractérisé en ce que** l'étape d'application du traitement comprend l'application d'une couche additionnelle.

22. Le procédé de la revendication 21, **caractérisé en ce que** la couche additionnelle est colorée.


**Patentansprüche**

1. Ophthalmische Linse, die eine Umgebungssicht in Übertragung erlaubt und mindestens einen Einsatz (26, 28) zum Projizieren zu dem Auge des Benutzers aufweist, der angepasst ist, um ein Licht zu empfangen, das sich in der Linse ausbreitet, **dadurch gekennzeichnet, dass** die Linse auf mindestens einer Oberfläche, die Umgebungslicht überträgt, eine absorbierende Behandlung aufweist, die auf einer geringen Stärke aufgebracht wird, die das Licht dämpft, das sich auf der Oberfläche von dem Inneren der Linse reflektiert, wobei sich die Behandlung auf der Oberfläche (24) der Linse, die zu dem Benutzer gerichtet ist, erstreckt, wobei sich die Behandlung nicht auf dem Teil der Oberfläche der Linse erstreckt, durch den das Licht, das von dem Einsatz kommt, zu dem Benutzer projiziert wird, um die Strahlen, die die Störbilder durch Reflexion auf der oder den Oberflächen der Linse in Bezug zu den Strahlen bilden, die das Hauptbild bilden, die sich in der Linse und nicht in der Nähe dieser Oberflächen ausbreiten, zu dämpfen.

2. Linse nach Anspruch 1, **dadurch gekennzeichnet, dass** sich die Behandlung auf der Oberfläche (32) der Linse, die dem Benutzer entgegengesetzt ist, erstreckt.

3. Linse nach einem der Ansprüche 1 bis 2, **dadurch gekennzeichnet, dass** sie einen Empfangs (26) aufweist, der angepasst ist, um ein Licht zu empfangen, das von außerhalb der Linse kommt, um es zu Projektions (28) zu projizieren.

4. Linse nach Anspruch 3, **dadurch gekennzeichnet, dass** sich die Behandlung nicht auf dem Teil der Oberfläche der Linse erstreckt, durch den das Licht, das von außerhalb der Linse kommt, in die Linse eindringt.

5. Linse nach Anspruch 4, **dadurch gekennzeichnet, dass** die Behandlung eine Pigmentierungsbehandlung der Linse in der Nähe ihrer Oberfläche ist.

6. Linse nach Anspruch 5, **dadurch gekennzeichnet, dass** die Pigmentierungsbehandlung auf einer Tiefe kleiner als 50 μm ausgehend von der Oberfläche erfolgt.

7. Linse nach Anspruch 6, **dadurch gekennzeichnet, dass** die Pigmentierungsbehandlung auf einer Tiefe von 10 bis

50 μm ausgehend von der Oberfläche erfolgt.

8. Linse nach einem der Ansprüche 1 bis 4, **dadurch gekennzeichnet, dass** die Behandlung eine zusätzliche Schicht, die auf der Oberfläche aufgebracht wird, ist.

9. Linse nach Anspruch 8, **dadurch gekennzeichnet, dass** die zusätzliche Schicht gefärbt ist.

10. Verfahren zum Verringern der relativen Stärke der Strahlen, die Störbilder durch Reflexion auf der oder den Oberflächen der Linse in Bezug zu den Strahlen bilden, die das Hauptbild bilden, die sich in der Linse und nicht in der Nähe ihrer Oberflächen in einer ophthalmischen Linse ausbreiten, die die Umgebungssicht in Übertragung erlaubt, und die mindestens einen Einsatz (26, 28) zum Projizieren zu dem Auge des Benutzers aufweist, der angepasst ist, um ein Licht zu empfangen, das sich in der Linse ausbreitet, wobei das Verfahren das Aufbringen auf mindestens einer Oberfläche der Linse, die das Umgebungslicht überträgt, einer absorbierenden Behandlung umfasst, die auf einer geringen Stärke aufgebracht wird, die das Licht dämpft, das sich auf der Oberfläche von dem Inneren der Linse reflektiert, wobei das Aufbringen auf der Oberfläche (24) der Linse, die zu dem Benutzer gerichtet ist, erfolgt, und nicht auf dem Teil der Oberfläche der Linse, durch den das Licht, das von dem Einsatz kommt, zu dem Benutzer projiziert wird, erfolgt.

11. Verfahren nach Anspruch 10, **dadurch gekennzeichnet, dass** das Aufbringen auf der Oberfläche (32) der Linse, die dem Benutzer entgegengesetzt ist, erfolgt.

12. Verfahren nach Anspruch 10, **dadurch gekennzeichnet, dass** es vor dem Schritt des Aufbringens einen Abdeckungsschritt des Teils der Oberfläche der Linse, durch den das Licht, das von dem Einsatz kommt, zu dem Benutzer projiziert wird, umfasst.

13. Verfahren nach Anspruch 12, **dadurch gekennzeichnet, dass** es nach dem Schritt des Aufbringens einen Freilegeschritt des Teils der Oberfläche der Linse, durch den das Licht, das von dem Einsatz kommt, zu dem Benutzer projiziert wird, umfasst.

14. Verfahren nach einem der Ansprüche 10 bis 13, **dadurch gekennzeichnet, dass** die Linse einen Empfangseinsatz (26) aufweist, der angepasst ist, um ein Licht zu empfangen, das von außerhalb der Linse kommt, um es zu Projektions (28) zu projizieren, und dass das Aufbringen nicht auf dem Teil der Oberfläche der Linse, durch den das Licht, das von außerhalb der Linse kommt, in die Linse eindringt, erfolgt.

15. Verfahren nach Anspruch 14, **dadurch gekennzeichnet, dass** es vor dem Schritt des Aufbringens einen Abdeckungsschritt des Teils der Oberfläche der Linse, durch den das Licht, das von außerhalb der Linse kommt, in die Linse eindringt, umfasst.

16. Verfahren nach Anspruch 15, **dadurch gekennzeichnet, dass** es nach dem Schritt des Aufbringens einen Freilegeschritt des Teils der Oberfläche der Linse, durch den das Licht, das von außerhalb der Linse kommt, in die Linse eindringt, umfasst.

17. Verfahren nach einem der Ansprüche 10 bis 16, **dadurch gekennzeichnet, dass** die Behandlung eine Pigmentierungsbehandlung der Linse in der Nähe ihrer Oberfläche ist.

18. Verfahren nach Anspruch 17, **dadurch gekennzeichnet, dass** die Pigmentierungsbehandlung auf einer Tiefe kleiner als 50 μm ausgehend von der Oberfläche erfolgt.

19. Verfahren nach Anspruch 18, **dadurch gekennzeichnet, dass** die Pigmentierungsbehandlung auf einer Tiefe von 10 bis 50 μm ausgehend von der Oberfläche erfolgt.

20. Verfahren nach einem der Ansprüche 17 bis 19, **dadurch gekennzeichnet, dass** die Pigmentierungsbehandlung durch Eintauchen der Linse in ein Pigmentbad erfolgt.

21. Verfahren nach einem der Ansprüche 10 bis 16, **dadurch gekennzeichnet, dass** der Schritt des Aufbringens der Behandlung das Aufbringen einer zusätzlichen Schicht umfasst.

22. Verfahren nach Anspruch 21, **dadurch gekennzeichnet, dass** die zusätzliche Schicht gefärbt ist.

**Claims**

1. Ophthalmic lens allowing ambient vision in transmission and comprising at least one insert (26, 28) for projecting towards the eye of the user and suitable for receiving light propagating in the lens, **characterised in that** the lens has, on at least one ambient-light-transmitting surface, an absorbing treatment applied over a small thickness and attenuating the light reflecting from said surface from the interior of the lens, the treatment extending over the surface (24) of the lens which is directed towards the user, the treatment not extending over the portion of the surface of the lens through which the light coming from the insert is projected towards the user, in order to attenuate the rays forming ghost images by reflection from the one or more surfaces of the lens with respect to the rays forming the main image and propagating in the lens and not in the vicinity of its surfaces.

2. Lens according to Claim 1, **characterised in that** the treatment extends over the surface (32) of the lens opposite the user.

3. Lens according to one of Claims 1 to 2, **characterised in that** it comprises a receiving (26) suitable for receiving light coming from the exterior of the lens in order to project it towards projecting (28).

4. Lens according to Claim 3, **characterised in that** the treatment does not extend over the portion of the surface of the lens via which the light coming from the exterior of the lens penetrates into the lens.

5. Lens according to Claim 4, **characterised in that** the treatment is a pigment-based treatment of the lens in the vicinity of its surface.

6. Lens according to Claim 5, **characterised in that** the pigment-based treatment is carried out to a depth smaller than 50 $\mu$m from the surface.

7. Lens according to Claim 6, **characterised in that** the pigment-based treatment is carried out to a depth of 10 to 50 $\mu$m from the surface.

8. Lens according to one of Claims 1 to 4, **characterised in that** the treatment is an additional layer added to the surface.

9. Lens according to Claim 8, **characterised in that** the additional layer is coloured.

10. Method for decreasing the relative intensity of the rays forming ghost images by reflection from the one or more surfaces of a lens with respect to the rays forming the main image and propagating in the lens and not in the vicinity of its surfaces, in an ophthalmic lens allowing ambient vision in transmission and comprising at least one insert (26, 28) for projecting towards the eye of the user and suitable for receiving light propagating in the lens, the method comprising applying, to at least one ambient-light-transmitting surface of the lens, an absorbing treatment applied over a small thickness and attenuating the light reflecting from said surface from the interior of the lens, the treatment being applied to the surface of the lens which is directed towards the user and not to the portion of the surface of the lens through which the light coming from the insert is projected towards the user.

11. Method according to Claim 10, **characterised in that** the treatment is applied to the surface (32) of the lens opposite the user.

12. Method according to Claim 10, **characterised in that** it comprises, before the applying step, a step of masking the portion of the surface of the lens through which the light coming from the insert is projected towards the user.

13. Method according to Claim 12, **characterised in that** it comprises, after the applying step, a step of demasking the portion of the surface of the lens through which the light coming from the insert is projected towards the user.

14. Method according to one of Claims 10 to 13, **characterised in that** the lens comprises a receiving insert (26) suitable for receiving light coming from the exterior of the lens in order to project it towards a projector (28) and **in that** the treatment is not applied to the portion of the surface of the lens via which the light coming from the exterior of the lens penetrates into the lens.

15. Method according to Claim 14, **characterised in that** it comprises, before the applying step, a step of masking the portion of the surface of the lens through which the light coming from the exterior of the lens penetrates into the lens.

16. Method according to Claim 15, **characterised in that** it comprises, after the applying step, a step of demasking the portion of the surface of the lens through which the light coming from the exterior of the lens penetrates into the lens.

17. Method according to one of Claims 10 to 16, **characterised in that** the treatment is a pigment-based treatment of the lens in the vicinity of its surface.

18. Method according to Claim 17, **characterised in that** the pigment-based treatment is carried out to a depth smaller than 50 $\mu$m from the surface.

19. Method according to Claim 18, **characterised in that** the pigment-based treatment is carried out to a depth of 10 to 50 $\mu$m from the surface.

20. Method according to one of Claims 17 to 19, **characterised in that** the pigment-based treatment is carried out by submerging the lens in a pigment bath.

21. Method according to one of Claims 10 to 16, **characterised in that** the step of applying the treatment comprises applying an additional layer.

22. Method according to Claim 21, **characterised in that** the additional layer is coloured.

# FIG_1

# FIG_2

## FIG_3

## FIG_4

## FIG_5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5886822 A
- US 6204974 B
- US 6124977 A